# EUROPÄISCHE PATENTANMELDUNG

(11) **EP 1 502 732 A1**
(43) Veröffentlichungstag der Anmeldung: **02.02.2005**
(21) Anmeldenummer: 04102991.9
(22) Anmeldetag: 28.06.2004
(51) Int. Cl.: B32B 15/08, B65D 17/50, B65D 77/20

(54) **Deckelfolie**

(30) Priorität: 28.07.2003 AT 5262003 U
(71) Anmelder: Frantschach Coating Austria GmbH, 8740 Zeltweg (AT)
(72) Erfinder: Rupp, Christian, 8740 Zeltweg (AT)
(74) Vertreter: Müllner, Erwin, Dr.

(57) **Zusammenfassung**

Eine Deckelfolie (4) zum Heißsiegeln auf den Rand (2) eines Glasgefäßes (1) umfasst eine Trägerfolie, insbesondere eine Aluminiumfolie (5) mit einer Beschichtung (6) aus Athyl-Acrylsäure-Copolymer mit einem Säureanteil zwischen 10 und 25 Masse-%. Diese Deckelfolie (4) wird unmittelbar auf den unbehandelten Rand (2) des Glasgefäßes (1) aufgesiegelt.

## Beschreibung

### Technische Gebiet

Die Erfindung betrifft eine Deckelfolie zum Heißsiegeln als Verschluss für ein Glasgefäß, wobei die Deckelfolie eine Trägerfolie wie insbesondere eine Aluminiumfolie einer Stärke von 30-50 µm und eine direkt extrudierte Beschichtung auf der Trägerfolie durch ein Polymer, vorzugsweise ebenfalls in einer Stärke von 30-50 µm aufweist.

### Stand der Techniek

Eine Vielzahl von Erzeugnissen beispielsweise im Bereich der Lebensmittel oder der Kosmetik werden in Glasgefäßen angeboten, die z.B. als Aromaschutz oder zur luftdichten Lagerung sowie als Originalverschlussgarantie meist unter einer Schraubkappe eine Deckelfolie aufweisen. Immer dann, wenn maximale Dichtheit gefordert ist, werden Aluminiumfolien eingesetzt, die längs des Randes des Glasgefäßes verklebt oder bei hohen Temperaturen aufgesiegelt werden. Letzteres erfordert eine Beschichtung der Aluminiumfolie mit einem Kunststoff, der über seinen Schmelzpunkt erhitzt direkt mittels Flachdüse auf die Aluminiumfolie extrudiert wird. Um die bekannten Kunststoffe wirksam und haltbar aufsiegeln zu können, ist heute eine spezielle Behandlung des Glasrandes erforderlich. Ohne eine solche vorbereitende Behandlung des Glasrandes hält die Deckelfolie nicht. Mit der einen gesonderten Arbeitsgang erfordernden Behandlung, z.B. unter Einsatz von Chromverbindungen, lässt sich über die Temperatur des Heißsiegelns einstellen, ob die Deckelfolie leicht entfernt oder im Sinne eines Originalverschlusses nur unter sichtbarer Zerstörung geöffnet und wenigstens teilweise abgezogen werden kann. Haltekräfte über eine gewisse Obergrenze hinaus sind beim Stand der Technik nicht erreichbar.

In einem ganz anderen Zusammenhang ist Ethyl-Acrylsäure-Copolymer bekannt. Es wird innerhalb von Verbundfolien zur Verbindung des Schichtaufbaues, also im Inneren einer Verbundfolie eingesetzt.

### Offenbarung

### Technisches Problem

Die Erfindung zielt darauf ab, eine Deckelfolie zu schaffen, die auf den Rand eines Glasbehälters aufsiegelbar ist und die höhere Haltekräfte als bisher am Glasrand bei geringerem Aufwand insbesondere hinsichtlich einer Vorbehandlung entwickelt.

### Technische LÃ¶sung

Dies wird bei einer Deckelfolie der eingangs beschriebenen Art dadurch erreicht, dass das Polymer ein Ethyl-Acrylsäure-Copolymer mit einem Säureanteil zwischen 10 und 25 Masse-%, vorzugsweise von 11 Masse-%, zum unmittelbaren Aufsiegeln der Deckelfolie auf den unbehandelten Rand des Glasgefäßes ist. In überraschender und für den Fachmann unerwarteter Weise entwickelt das genannte Copolymer bei dem angeführten Säureanteil eine Haltekraft, die mit den bekannten Polymeren auch nach aufwändiger Vorbehandlung des Glasrandes bei vergleichbaren Siegeltemperaturen nicht erreicht werden kann. Ohne Vorbehandlung des Glasrandes haften die üblichen Polymere auch bei hohen Siegeltemperaturen von z.B. 240°C nicht. Der erfindungsgemäße Aufbau der Deckelfolie mit der äußeren direkten Extrusionsbeschichtung mit dem Ethyl-Acrylsäure-Copolymer mit einem Säureanteil von 10 bis 25 Masse-% ermöglicht die Einsparung einer Vorbehandlung der Glasgefäße und stellt daher bei der Abfüllung und marktgerechten Konfektionierung von Waren unterschiedlicher Art einen entscheidenden Vorteil dar. Einerseits kann Ausschuss infolge ungenügender Glasbehandlung nicht mehr auftreten und anderseits kann das Verschließen in einem Arbeitsgang erfolgen und damit beschleunigt sowie auch wesentlich kostengünstiger gehalten werden.

### Zeichnungenbeschreibung

In den Zeichnungen ist als Ausführungsbeispiel in Fig. 1 ein Querschnitt durch einen Teil eines Glasgefäßes mit stark vergrößerter Deckelfolie, in Fig. 2 eine Ansicht von oben und in Fig. 3 ein Diagramm der Siegelnahtfestigkeit P über der angewendeten Siegeltemperatur T dargestellt.

### Best Reglerungsform

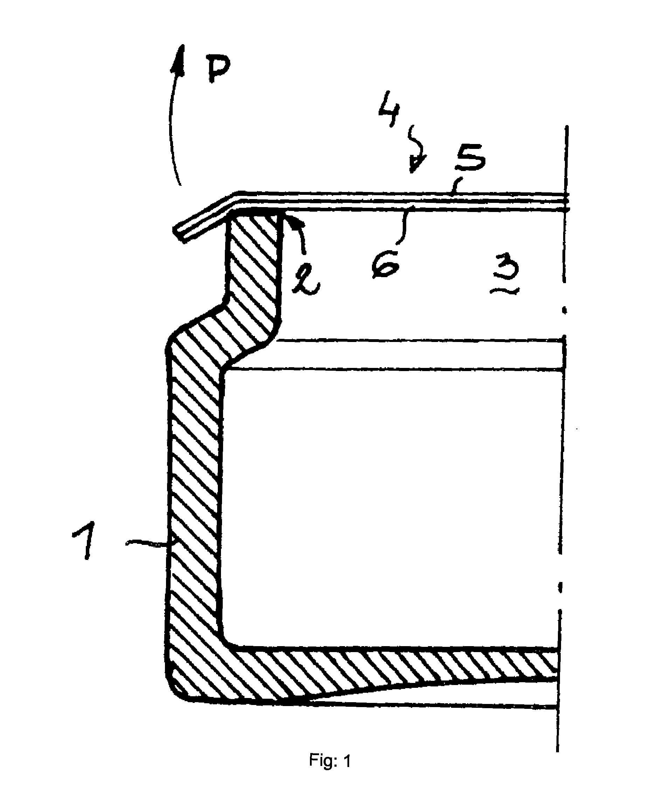

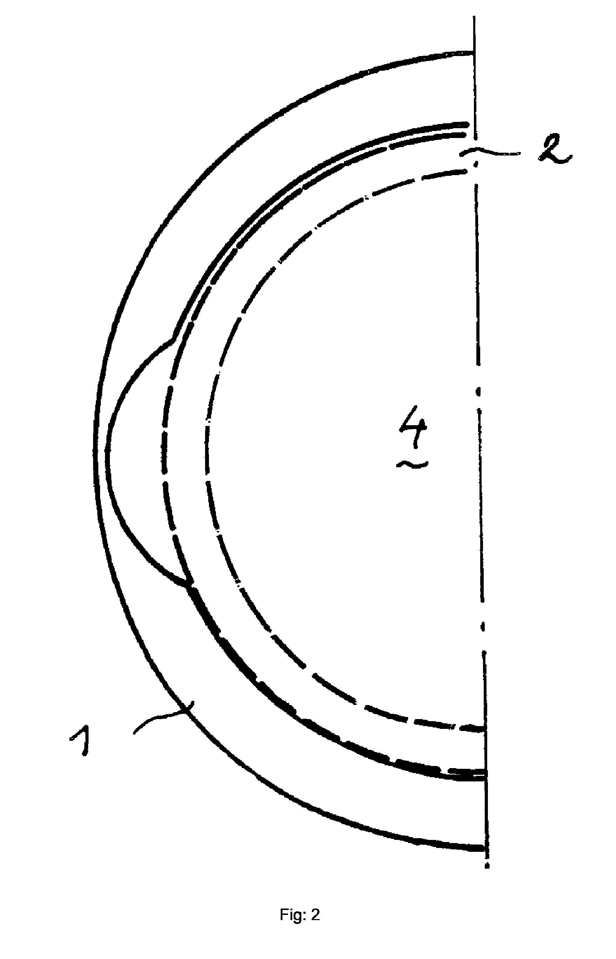

Ein kreiszylindrisches Glasgefäß 1 für eine kosmetische Creme weist gemäß Fig. 1 und 2 einen flachen oberen Rand 2 an der kreisrunden Öffnung 3 auf, die durch eine Deckelfolie 4 verschlossen ist. Eine Schraubkappe (nicht dargestellt) deckt die Deckelfolie 4 ab. Die Deckelfolie 4 umfasst hier zwei Schichten, nämlich eine undurchlässige Aluminiumfolie 5 von z.B. 40 µm Stärke und eine auf diese direkt extrudierte Beschichtung 6 (z.B. 40 gsm entsprechend ebenfalls etwa 40 µm) aus Ethyl-Acrylsäure-Copolymer mit einem Säureanteil von 11 Masse-%. Die Deckelfolie 4 wurde auf den unbehandelten Rand 2 bei einer Temperatur von 250° und bei einem Druck von 3 bar während einer Sekunde aufgesiegelt. Es werden sehr hohe Haltekräfte bzw. Verschlusskräfte erzielt, obwohl das Glas bzw. der Rand 2 des Glasgefäßes 1 keiner Behandlung unterzogen wurde. Das Ergebnis war überraschend, weil trotz der hohen Haltekräfte die Folie 4 unbeschädigt geblieben ist und keine Reste am Rand 2 nach dem Abziehen zurückgeblieben sind.

Die gewünschte Haltekraft lässt sich leicht über die Temperatur des Heißsiegelns einstellen. Es ergeben sich völlig homogene Verschlusseigenschaften über den ganzen Verschlussbereich (Bereich des Randes 2).

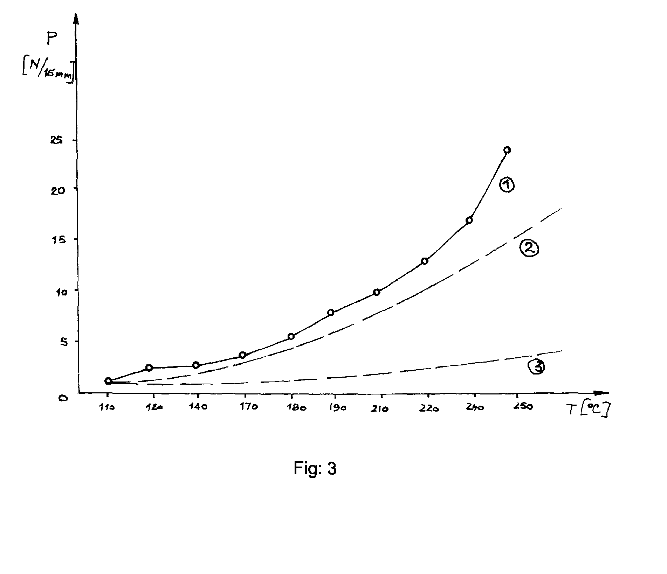

Die Siegelnahtfestigkeit wird nach einer genormten Methode als Kraft pro Siegelrandbreite von 15 mm gemessen [N/15 mm]. Dabei wird ein 15 mm breiter Streifen der Deckelfolie 4 z.B. über eine Länge von 50 mm auf eine unbehandelte Glasplatte heißgesiegelt. Der Streifen weist einen Überstand über den Rand der Glasplatte hinaus im Sinne einer Grifflasche auf. An dieser wird mit zunehmender Kraft gezogen, bis sich der Streifen von der unbehandelten Glasplatte abzulösen beginnt. Je nach der gewählten Siegeltemperatur (zwischen 110 und 250°C) ergeben sich für die genormte Messbreite von 15 mm Kräfte, die in Fig. 3 als Messpunkte eingetragen und durch die Linie 1 verbunden sind. Die Linie 2 gibt annähernd die Kurve wieder, die sich bei einem Versuch mit einer herkömmlichen Polymerbeschichtung auf Aluminium als Träger und bei einer durch Chromverbindungen vorbehandelten Glasplatte ergibt. Die Kurve 3 zeigt den Stand der Technik auf unbehandeltem Glas. Daraus folgt, dass die erfindungsgemäße Beschichtung mit dem speziellen Copolymer bei unbehandeltem Glas zu höheren Haltekräften führt als beim Stand der Technik bei behandeltem Glas. Der Stand der Technik auf unbehandeltem Glas führt gemäß Fig. 3 zu keinem praxisgerechten Ergebnis, weil die Haltekräfte der Deckelfolie viel zu gering wären, um der Deckelfolie die nötigen Siegeleigenschaften zu verleihen.

Die Eigenschaften des hier eingesetzten Copolymers treten in Verbindung mit Glasgefäßen 1, deren Rand 2 unbehandelt bleiben kann, besonders überzeugend auf. Wenn eine weniger dampfdichte Folie statt Aluminium für vereinzelte Zwecke genügt, dann könnte auch auf diese das erfindungsgemäße Copolymer direkt extrudiert werden.

## Patentansprüche

1. Deckelfolie zum Heißsiegeln als Verschluss für ein Glasgefäß, wobei die Deckelfolie eine Trägerfolie wie insbesondere eine Aluminiumfolie einer Stärke von 30-50 µm und eine direkt extrudierte Beschichtung auf der Trägerfolie durch Polymer, vorzugsweise ebenfalls in einer Stärke von 30-50 µm aufweist, **dadurch gekennzeichnet, dass** das Polymer ein Ethyl-Acrylsäure-Copolymer mit einem Säureanteil zwischen 10 und 25 Masse-%, vorzugsweise von 11 Masse-% zum unmittelbaren Aufsiegeln der Deckelfolie (4) auf den unbehandelten Rand (2) des Glasgefäßes (1) ist.
